(19) Europäisches Patentamt / European Patent Office / Office européen des brevets

(11) **EP 1 721 121 B1**

(12) **EUROPÄISCHE PATENTSCHRIFT**

(45) Veröffentlichungstag und Bekanntmachung des Hinweises auf die Patenterteilung:
**01.08.2007 Patentblatt 2007/31**

(21) Anmeldenummer: **04804156.0**

(22) Anmeldetag: **22.12.2004**

(51) Int Cl.:
*G01B 11/06* *(2006.01)*

(86) Internationale Anmeldenummer:
**PCT/EP2004/014560**

(87) Internationale Veröffentlichungsnummer:
**WO 2005/085751 (15.09.2005 Gazette 2005/37)**

(54) **VORRICHTUNG UND VERFAHREN ZUR MESSUNG DER DICKE EINER TRANSPARENTEN PROBE**

DEVICE AND METHOD FOR MEASURING THE THICKNESS OF A TRANSPARENT SAMPLE

DISPOSITIF ET PROCEDE POUR MESURER L'EPAISSEUR D'UN ECHANTILLON TRANSPARENT

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.03.2004 DE 102004010311**

(43) Veröffentlichungstag der Anmeldung:
**15.11.2006 Patentblatt 2006/46**

(73) Patentinhaber: **Isra Surface Vision GmbH**
**45699 Herten (DE)**

(72) Erfinder:
• **PINGEL, Ulrich**
**45770 Marl (DE)**
• **LEUTE, Stefan**
**45527 Hattingen (DE)**
• **WEIGT, Paul**
**44869 Bochum (DE)**

(74) Vertreter: **KEIL & SCHAAFHAUSEN**
**Patentanwälte**
**Cronstettenstrasse 66**
**60322 Frankfurt am Main (DE)**

(56) Entgegenhaltungen:
**EP-A- 0 485 043 DE-A1- 4 143 186**
**US-A- 5 251 010 US-A- 5 636 027**
**US-B1- 6 285 451**

EP 1 721 121 B1

**Beschreibung**

Die Erfindung betrifft eine Vorrichtung zur Messung der Dicke einer transparenten Probe, insbesondere eines Glasbands oder einer Glasscheibe, welche vorzugsweise glatte Oberflächen aufweist, mit einem unter einem ersten Einfallswinkel schräg auf die vordere Oberfläche der Probe einfallenden ersten Lichtstrahl, insbesondere einem ersten Laserstrahl, mit einem unter einem zweiten Einfallswinkel schräg auf die vordere Oberfläche der Probe einfallenden zweiten Lichtstrahl, insbesondere einem zweiten Laserstrahl, wobei der erste Einfallswinkel und der zweite Einfallswinkel verschieden sind, und mit mindestens einem Detektor zum Erfassen der von der Probe reflektierten Lichtstrahlen der ersten und zweiten einfallenden Lichtstrahlen und zum Feststellen deren Position. Die Erfindung bezieht sich ferner auf ein entsprechendes Verfahren zur Dickenmessung, das vorzugsweise mit der Vorrichtung gemäß der vorliegenden Erfindung durchgeführt werden kann.

Glasdicken bei der Herstellung von Glasscheiben, Glasbändern oder dgl. sind genormt. Diese Normdicken sind mit bei der Herstellung einzuhaltenden Toleranzen versehen. Wenn man durch ständige Vermessung der Dicke und durch einen stabilen Prozess an der unteren Toleranzgrenze fertigen kann, lassen sich in der Massenproduktion erhebliche Glasmengen einsparen. Ferner kann die Ausbeute guten Glases erhöht werden, wenn man die Breite des verkaufsfähigen Glases innerhalb der vorgegebenen Maschinenbreite aufgrund einer guten Kontrollmöglichkeit vergrößern kann. Auch bei Dickenumstellungen auf einer Floatglasanlage lassen sich bei einer kontinuierlichen Möglichkeit zur Messung die Zeiten beim Übergang von einer Dicke zur anderen minimieren, was ebenfalls die Ausbeute verkaufsfähigen Glases erhöht.

Für die Überwachung der Glas- bzw. Materialdicke von transparenten Materialien sind Vorrichtungen für die berührungslose automatische Messung der Dicke transparenter Materialien bekannt, bei denen Laserstrahlen unter einem bestimmten Winkel auf die zu vermessende Oberfläche projiziert werden. Der Laserstrahl wird an der Vorderseite des Messobjekts teilweise reflektiert. Ein weiterer Teil des Strahls wird in das Material hineingebrochen, an der Rückseite reflektiert und an der Vorderseite nochmals gebrochen, so dass beide Lichtstrahlen von dem Messobjekt zurückreflektiert werden. Der Abstand der beiden Reflexe ist ein Maß für die Dicke des Messobjekts und wird entsprechend ausgewertet.

Um auch bei nichtparallelen Oberflächen des Messobjekts und trotz Verkippung zwischen Messobjekt und Messvorrichtung zuverlässige Messwerte zu erhalten, wird in der DE 41 43 186 A1 eine Vorrichtung mit je zwei Laserlichtquellen, zwei Strahlteilern sowie zwei Zeilensensoren vorgeschlagen, die symmetrisch in der Weise an einem Umlenkprisma angeordnet sind, dass die Strahlen aus den Laserlichtquellen in wechselnden Richtungen auf das Messobjekt geführt werden und die Reflexe von dessen Vorder- und Rückseite wiederum durch das Umlenkprisma und die Strahlteiler hindurch auf die Zeilensensoren fallen. Hierbei besteht der Nachteil, dass der Strahlengang vergleichsweise kompliziert ist und eine Vielzahl optischer Elemente notwendig sind. Zudem ist es nicht möglich, eine Krümmung der Materialprobe zu erkennen und zu korrigieren, so dass die Messergebnisse mit einer erheblichen Messungenauigkeit behaftet sind.

Aus der EP-A-0 485 043 ist es bekannt, die Glasqualität, insbesondere die Krümmung der Vorder- und Rückseite einer Glasplatte, mittels zweier paralleler, auf die Glasplatte gerichteter Laserstrahlen zu messen.

Aufgabe der Erfindung ist es daher, eine Möglichkeit zur Dickenmessung vorzuschlagen, die einfach realisierbar ist und die Dicke sehr genau ermitteln kann.

Diese Aufgabe wird bei einer Vorrichtung der eingangs genannten Art im Wesentlichen dadurch gelöst, dass mindestens ein einfallender, zu dem ersten oder zweiten Lichtstrahl im Wesentlichen paralleler Lichtstrahl auf die vordere Oberfläche der Probe gerichtet ist und dass mindestens ein Detektor zum Erfassen eines von der Probe reflektierten Lichtstrahls des parallelen Lichtstrahls und zum Feststellen dessen Position vorgesehen ist. Durch das Installieren eines weiteren Laserstrahl parallel zu dem von links oder rechts einfallenden ersten oder zweiten Laserstrahl und die Reflexion dieser parallelen Strahlen bspw. an der vorderen Oberfläche der Probe kann ein möglicher Krümmungsradius der Probe in dem untersuchten Oberflächenabschnitt bestimmt werden. Dazu misst man den Abstand dieser beiden reflektierten Strahlen in einer bekannten Entfernung zum Glas. Aus der Kenntnis des Krümmungsradius kann dann eine Korrektur für die zu ermittelnde Dicke der Probe abgeleitet werden. Aufgrund dieser Anordnung mit drei einfallenden Strahlen können auf einfache Weise eine Neigungskorrektur, eine Keilwinkelkorrektur und eine Krümmungskorrektur durchgeführt werden, so dass der Dickensensor entsprechend der erfindungsgemäßen Vorrichtung bei einem vergleichsweise einfachen und kompakten Aufbau eine hohe Präzision bei der ermittelten Dicke liefert.

Da der dritte, parallel einfallende Lichtstrahl nur für die Krümmungskorrektur benötigt wird, kann erfindungsgemäß vorgesehen sein, dass der dritte Lichtstrahl abschaltbar ausgebildet ist, um Störeinflüsse bei Messungen zu vermeiden, bei denen der dritte Lichtstrahl nicht benötigt wird. Dies betrifft insbesondere die Neigungs- und die Keilwinkelkorrektur.

Gemäß einer bevorzugten Ausführungsform der vorliegenden Erfindung liegen die einfallenden Lichtstrahlen und/oder die reflektierten Lichtstrahlen in einer gemeinsamen Strahlebene. Dann sind die Interpretation der Messergebnisse und die Realisierung des Aufbaus besonders einfach.

Um insbesondere auch in der Glasproduktion bei der Überwachung der laufenden Produktion von Glasbändern und Glasscheiben eingesetzt werden zu können, ist es erfindungsgemäß möglich, die Vorrichtung und die transparente Probe relativ zueinander zu bewegen. Dies ermöglicht eine kontinuierliche Überwachung des Produktionsprozesses. Dazu sind der Vorrichtung zugeordnete Führungsmittel vorgesehen, mit der die Probe, bspw. die Glasscheibe oder das Glasband, an der Vorrichtung vorbeiführbar sind. Die Führungsmittel dienen auch der Ausrichtung der transparenten Probe vor der Vorrichtung zur Messung ihrer Dicke, so dass die Probe in definierter Ausrichtung vor dem Dickensensor angeordnet werden kann. Dies dient insbesondere der Ausrichtung der Oberfläche der Probe relativ zu dem optischen System der Vorrichtung, insbesondere deren Messkopf.

Da die optischen Fehler in der Regel quer zur Zieh- bzw. Bewegungsrichtung des Glases größer sind als die optischen Störungen in Ziehrichtung, ist zum Auffinden dieser Fehler besonders vorteilhaft, wenn die relative Bewegungsrichtung, bei einem ortsfesten Dickensensor insbesondere die Zieh- bzw. Bewegungsrichtung der Probe, in der gemeinsamen Strahlebene der einfallenden Lichtstrahlen und/oder der reflektierten Lichtstrahlen liegt, vorteilhafter Weise senkrecht zur Probennormalen. Natürlich ist die Erfindung aber auch anwendbar, wenn die relative Bewegungsrichtung nicht in der gemeinsamen Strahlebene, sondern quer dazu angeordnet ist.

Um einen für die Interpretation der Messergebnisse vorteilhaften symmetrischen Aufbau des Dickensensors zu erreichen, können der erste Einfallswinkel und der zweite Einfallswinkel in der durch den ersten und den zweiten Lichtstrahl aufgespannten Strahlebene auf verschiedenen Seiten bezogen auf die Pro bennormale im Einfallsbereich liegen. Falls die Probennormale bei einer nicht waagrechten Anordnung des Dickensensors vor der Probe nicht in der gemeinsamen Strahlebene liegt, dient die Projektion der Probennormalen in die Strahlebene als Referenz. Insbesondere ist es vorteilhaft, wenn die auf beiden Seiten der Probennormale liegenden Einfallswinkel betragsmäßig gleich sind. Sie liegen bspw. in der Größenordnung von 45°.

Zum Erfassen der reflektierten Lichtstrahlen können erfindungsgemäß zwei Detektoren beabstandet voneinander vorzugsweise senkrecht zu der Oberfläche der Probe angeordnet sein, wobei ihre Sensorflächen vorzugsweise einander zugewandt sind. Bei einer solchen Sensoranordnung können normalerweise alle von den einfallenden Lichtstrahlen an der Probe reflektierten Lichtstrahlen in den beiden Detektoren ortsaufgelöst nachgewiesen werden. Als Detektoren kommen CCD-Chips, Zeilenkameras oder sonstige ortsauflösende Detektoren in Frage.

Es bietet sich erfindungsgemäß an, dass der Einfallsbereich der einfallenden ersten, zweiten und dritten Lichtstrahlen auf die Probe kleiner ist als der Abstand der beiden einander gegenüberliegenden Detektoren, welche vorzugsweise alle reflektierten Lichtstrahlen erfassen. Der durch die Auftreffpunkte sämtlicher einfallender Lichtstrahlen auf der vorderen Oberfläche der Probe definierte Einfallbereich wird vorteilhafter Weise so gewählt, dass alle reflektierten Lichtstrahlen in den Detektoren nachgewiesen werden.

Um die Anzahl der benötigten Lichtquellen, insbesondere Laser, zu minimieren, können gemäß einer bevorzugten Ausführungsform zwei Strahlteiler zur Erzeugung der drei Lichtstrahlen aus einem Lichtstrahl vorgesehen sein. Dadurch wird der erfindungsgemäße Dickensensor in der Herstellung kostengünstiger. Zudem wird die Justage insgesamt einfacher, da die aus den Strahlteilern austretenden Strahlen in einem definierten Winkel austreten, so dass nach Justage des Ursprungslichtstrahls, der Strahlteilereinheit sowie von ggf. zwei Umlenkspiegeln, die den optischen Messkopf begrenzen, die Strahlführung des erfindungsgemäßen Systems einjustiert ist. Dabei können die Strahlteiler den ausgekoppelten Strahl in einem Winkel von 90° gegenüber dem durchtretenden Strahl ausgeben. Damit lassen sich durch zwei parallele Umlenkspiegel, welche senkrecht zur gedachten Oberflächennormale der Probe angeordnet sind, einfach Einfallswinkel von 45° erzeugen. Einer der Strahlteiler zur Erzeugung des dritten Lichtstrahls kann dabei schaltbar ausgebildet sein, um den dritten Laserstrahl ein- und auszuschalten.

Um die Messergebnisse entsprechend auszuwerten, kann eine an den mindestens einen Detektor angeschlossene Auswerteeinrichtung zur Bestimmung der Dicke der Probe vorgesehen sein, wobei insbesondere eine Neigungskorrektur, eine Winkelkorrektur und/oder eine Krümmungskorrektur durchgeführt wird. In dieser Auswerteeinheit ist dann insbesondere das nachfolgend beschriebene, erfindungsgemäße Verfahren implementiert, das jedoch auch losgelöst von der zuvor beschriebenen Vorrichtung angewendet werden kann.

Bei dem erfindungsgemäßen Verfahren zur Messung der Dicke einer transparenten, insbesondere mit glatten Oberflächen versehenen Probe, ist vorgesehen, dass ein erster Lichtstrahl unter einem ersten Einfallswinkel schräg auf die vordere Oberfläche der Probe einfällt und die Positionen des an der vorderen Oberfläche reflektierten Lichtstrahls und des an der hinteren Oberfläche reflektierten Lichtstrahls bestimmt werden, dass ein zweiter Lichtstrahl unter einem zweiten, von dem ersten Einfallswinkel verschiedenen Einfallswinkel schräg auf die vordere Oberfläche der Probe einfällt und die Positionen des an der vorderen Oberfläche reflektierten Lichtstrahls und des an der hinteren Oberfläche reflektierten Lichtstrahls bestimmt werden, wobei aus dem Abstand der an der vorderen Oberfläche und der hinteren Oberfläche reflektierten Lichtstrahlen des ersten Lichtstrahls und/oder des zweiten Lichtstrahls die Dicke der transparenten Probe ermittelt wird und wobei durch Vergleich der Positionen zumindest eines Teils der reflektierten Lichtstrahlen eine Neigungs- und/oder Keilwinkelkorrektur durchgeführt wird.

Um zusätzlich auch noch eine mögliche Krümmung der Probe zu erkennen, ist vorgesehen, dass mindestens ein dritter Lichtstrahl in einem bekannten Abstand im Wesentlichen, d.h. innerhalb einer möglichen Justagegenauigkeit, parallel zu dem ersten oder zweiten Lichtstrahl schräg auf die vordere Oberfläche einfällt und durch Bestimmung der Positionen der jeweils an der vorderen Oberfläche bzw. an der hinteren Oberfläche reflektierten Lichtstrahlen dieser parallelen Lichtstrahlen eine Krümmungskorrektur durchgeführt wird.

Vorzugsweise fallen der erste Lichtstrahl und der zweite Lichtstrahl in der durch sie aufgespannten Strahlebene bezogen auf die Probennormale im Einfallsbereich von unterschiedlichen Seiten auf die vordere Oberfläche der Probe ein. Der Einfallsbereich ist dabei der Bereich, in dem die einfallenden Lichtstrahlen auf die Probe auftreffen. Diese liegen in einer vorteilhaften Ausgestaltung zwar nahe beieinander, um die Gesamtgröße des Messkopfes möglichst klein zu halten, treffen jedoch zumindest leicht versetzt auf der Oberfläche auf, um ein Vermischen der verschiedenen Strahlengänge zu vermeiden, welche einen höheren Aufwand bei der Mess- und Auswerteelektronik erfordern würde. Probe und Dickensensor sind bei der Anwendung des Verfahrens vorzugsweise so ausgerichtet, dass die Probennormale in der gemeinsamen Strahlebene der ersten und zweiten sowie ggf. auch dritten einfallenden und reflektierten Strahlen liegt.

Um eine hohe Symmetrie in dem System zu erreichen, welche die Interpretation der Messergebnisse erleichtert, können der erste und der zweite Einfallswinkel betragsmäßig gleich sein, vorzugsweise etwa 45° betragen.

Zur Neigungs- und/oder Keilwinkelkorrektur wird erfindungsgemäß aus der Position der vorzugsweise an der vorderen Oberfläche reflektierten Lichtstrahlen jeweils beim Auftreffen auf den Detektor der Abstand zu der Probe ermittelt, wobei bei einander nicht entsprechendem Abstand eine Keilwinkel- und/oder eine Neigungskorrektur vorgenommen wird. Bei dem Vergleich der Abstände zu den Proben kann ein unterschiedlicher Strahlengang, bspw. durch betragsmäßig verschiedene Einfallswinkel, berücksichtigt werden.

Aus einem nicht entsprechenden Abstand der reflektierten Lichtstrahlen des ersten und des zweiten Lichtstrahls kann dann erdfindungsgemäß ein Keil- bzw. Neigungswinkel ermittelt werden, mit dem eine Korrektur des zuvor ermittelten Dickenwertes vorgenommen wird.

Erfindungsgemäß kann zur Feststellung einer Krümmung der Abstand zwischen den reflektierten Lichtstrahlen des dritten Lichtstrahls und des dazu im Wesentlichen parallelen ersten oder zweiten Lichtstrahls bestimmt und eine Krümmungskorrektur durchgeführt werden. Dazu wird vorteilhafter Weise aus dem Abstand zwischen den reflektierten Lichtstrahlen des dritten Lichtstrahls und des dazu im Wesentlichen parallelen ersten oder zweiten Lichtstrahls der Krümmungswinkel und/ oder -radius ermittelt. Damit wird dann der zuvor ermittelte und durch die Neigungs- bzw. Keilwinkelkorrektur bereits korrigierte Dickenwert weiter korrigiert.

Ferner ist es erfindungsgemäß möglich, über die Beziehung D=2/R die Brechkraft D aus dem Krümmungsradius R zu bestimmen.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei sind alle beschriebenen und/oder bildlich dargestellten Merkmale Teil der vorliegenden Erfindung, unabhängig von ihrer Zusammenfassung in den Ansprüchen oder deren Rückbezügen.

Es zeigen:

Fig. 1 eine schematische Draufsicht auf eine erfindungsgemäße Vorrichtung zur Messung der Dicke einer transparenten Probe;

Fig. 2 schematisch einen Überblick über den Strahlengang für eine Dickenbestimmung;

Fig. 3 schematisch einen Überblick über den Strahlengang für eine Neigungskorrektur;

Fig. 4 schematisch einen Überblick über den Strahlengang für eine Keilwinkelkorrektur;

Fig. 5 schematisch einen Überblick über den Strahlengang für eine Krümmungskorrektur und

Fig. 6 schematisch einen Überblick über den Strahlengang für eine Dickenbestimmung bei einer gekrümmten Probe.

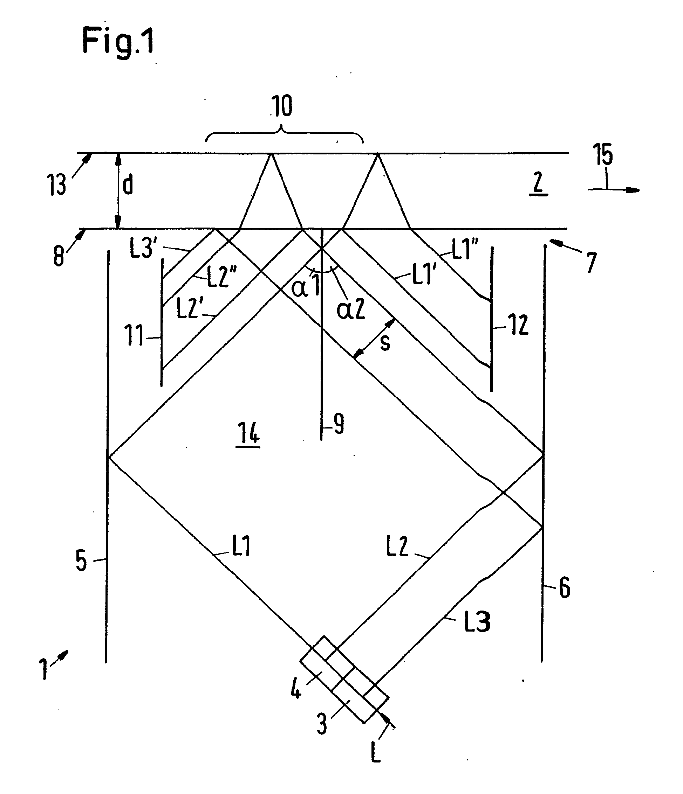

In Fig. 1 ist schematisch ein Dickensensor 1 dargestellt, der eine Vorrichtung zur Messung der Dicke einer transparenten Probe mit vorzugsweise glatten Oberflächen darstellt. Bei der Probe handelt es sich um ein Glasband 2 bzw. eine Glasscheibe.

Der Dickensensor 1 weist einen nicht dargestellten Laser auf, der einen gebündelten parallelen Licht- bzw. Laserstrahl L erzeugt, der durch zwei hintereinander angeordnete Strahlteiler 3, 4 verläuft. In den Strahlteilern 3, 4 wird der Laserstrahl L in insgesamt drei Laserstrahlen L1, L2, L3 aufgeteilt. Der erste Laserstrahl L1 tritt in Richtung des Laserstrahls L durch beide Strahlteiler 3, 4 hindurch, trifft unter einem Winkel von etwa 45° auf einen ersten Spiegel 5 und wird dort reflektiert. Der zweite Laserstrahl L2 wird in dem zweiten Strahlteiler 4 unter einem Winkel von etwa 90° aus dem Laserstrahl L ausgekoppelt, trifft unter einem Winkel von etwa 45° auf einen zweiten Spiegel 6 und wird dort reflektiert. Die beiden Spiegel 5, 6 begrenzen den den Messkopf bildenden optischen Strahlenraum des Dickensensors 1 und sind parallel zueinander auf gegenüberliegenden Seiten der Strahlteiler 3, 4 mit einander zugewandten Spiegelflächen angeordnet. Dabei sind die Spiegel 5, 6 senkrecht zu der Oberfläche des Glasbandes 2 angeordnet. Dadurch wird eine im Wesentlichen spiegelsymmetrische Anordnung des Dickensensors 1 im Hinblick auf die Laserstrahlen L1 und L2 erreicht. Die Erfindung ist jedoch nicht auf diese vorteilhafte Anordnung beschränkt.

Die von den Spiegeln 5, 6 umgelenkten Laserstrahlen L1 und L2 fallen durch eine vordere, dem Glasband 2 zugewandte Öffnung 7 des Dickensensors 1 unter Einfallswinkeln $\alpha$1 bzw. $\alpha$2 von jeweils 45° auf die vordere Oberfläche 8 des Glasbands 2, wobei die Einfallswinkel $\alpha$1 bzw. $\alpha$2 bezogen auf eine Probennormale 9 im Einfallsbereich 10 der Strahlen L1 und L2 unterschiedliche Vorzeichen aufweisen, so dass die Strahlen L1 und L2 bei betragsmäßig gleichem Einfallswinkel $\alpha$1 bzw. $\alpha$2 aus unterschiedlichen Richtungen, nämlich von links und rechts, auf die vordere Oberfläche 8 des Glasbandes 2 einfallen.

Dort werden die einfallenden Strahlen L1 und L2 teilweise reflektiert und fallen als reflektiere Laserstrahlen L1', L2' auf entsprechend angeordnete Detektoren 11, 12. Ein anderer Teil der einfallenden Lichtstrahlen L1 und L2 wird in das Glasband 2 hinein gebrochen, an der hinteren Oberfläche 13 reflektiert und tritt nach einer nochmaligen Brechung an der vorderen Oberfläche 8 aus dem Glasband 2 aus. Diese weiteren, an der hinteren Oberfläche 13 reflektierten Laserstrahlen L1" und L2" verlaufen im Wesentlichen parallel zu den an der vorderen Oberfläche reflektierten Lichtstrahlen L1' und L2' und fallen auch auf die Detektoren 11, 12.

Dazu sind die Detektoren 11, 12 jeweils parallel vor einem Spiegel 5, 6 angeordnet und weisen einander zugewandte Sensorflächen auf, die im Wesentlichen senkrecht zur Oberfläche 8 des Glasbandes 2 ausgerichtet sind. Die Detektoren 11 bzw. 12 sind so angeordnet, dass sie jeweils beide reflektierten Laserstrahlen L1' und L1" bzw. L2' und L2" des ersten bzw. zweiten einfallenden Laserstrahls L1 bzw. L2 auffangen und deren Position bestimmen können. Die Detektoren 11, 12 weisen positionsauflösende Sensoren auf, mit denen die Position eines auf sie einfallenden Lichtstrahles genau bestimmt werden kann. Dafür eignen sich CCD-Chips, Zeilenkameras oder dgl. Sensoren.

In dem dem Strahlteiler 4 vorgeschalteten Strahlteiler 3 wird ein zu dem zweiten einfallenden Laserstrahl L2 paralleler einfallender Laserstrahl L3 erzeugt, der wie der Laserstrahl L2 an dem Spiegel 6 umgelenkt wird und zu dem Laserstrahl L2 in einem Abstand s im Rahmen der Montagegenauigkeit parallel verläuft. Im Einfallsbereich 10 trifft der dritte Laserstrahl L3 auf die vordere Oberfläche 8 des Glasbandes 2. Dabei ist der Einfallsbereich 10 durch den Bereich definiert, in dem die einfallenden Laserstrahlen L1, L2 und L3 auf der vorderen Oberfläche 8 auftreffen. Dieser Einfallsbereich 10 ist kleiner als der Abstand der beiden gegenüberliegenden Detektoren 11, 12 und erstreckt sich etwa über die Hälfte ihres Abstands. Die Anordnung der Laserstrahlen L1, L2, L3 und der Detektoren 11, 12 ist so gewählt, dass die reflektierten Strahlen L2', L2" und L3' der zweiten und dritten einfallenden Strahlen L2 und L3 auf die Sensorfläche des Detektors 11 und die reflektierten Strahlen L1' und L1" des ersten einfallenden Strahles L1 auf die Sensorfläche des Detektors 12 fallen.

Aufgrund der bekannten Position der Detektoren 11, 12 in dem Dickensensor 1 und relativ zu dem Glasband 2 bzw. dessen optimaler Messposition ist es möglich, die genauen Positionen der reflektierten Laserstrahlen L1', L1", L2', L2" und L3' absolut, relativ zu der vorderen Oberfläche 8 des Glasbands 2 und/oder relativ zueinander zu bestimmen. Mit Hilfe dieser Informationen kann in einer nicht dargestellten Auswerteeinrichtung die Dicke d des Glasbands 2 ermittelt sowie eine Neigungs-, Keilwinkel- und Krümmungskorrektur durchgeführt werden.

Durch die drei einfallenden Lichtstrahlen L1, L2 und L3 wird eine gemeinsame Strahlebene 14 aufgespannt, in der auch die Probennormale 9 liegt..Daher liegen auch die reflektierten Lichtstrahlen L1', L1", L2', L2" und L3' in der Strahlebene 14. Auch wenn diese Anordnung bevorzugt ist, können bei einem erfindungsgemäßen Dickensensor 1 auch die Strahlebenen der einfallenden und der reflektierten Laserstrahlen auseinander fallen. In diesem Fall liegt auch die Probennormale nicht in einer der Strahlebenen.

Der zuvor beschriebene Dickensensor 1 kann insbesondere verwendet werden, um die Dicke d der Probe 2, insbesondere eines Glasbands oder einer Glasscheibe, unmittelbar bei der Produktion zu messen. Dabei wird dann das Glasband 2 oder die Glasscheibe an dem Dickensensor vorbeibewegt und die Dicke d der Probe 2 kontinuierlich oder in vorgegebenen zeitlichen Abständen gemessen. Die Bewegungsrichtung 15 des Glasbands 2 liegt dann vorzugsweise auch in der gemeinsamen Strahlebene 14.

Das erfindungsgemäße Verfahren zur Ermittlung der Dicke d wird nachfolgend erläutert. Das Verfahren wird vorzugsweise mit dem Dickensensor 1 durchgeführt, der insbesondere senkrecht zum Glasband 2 angeordnet ist.

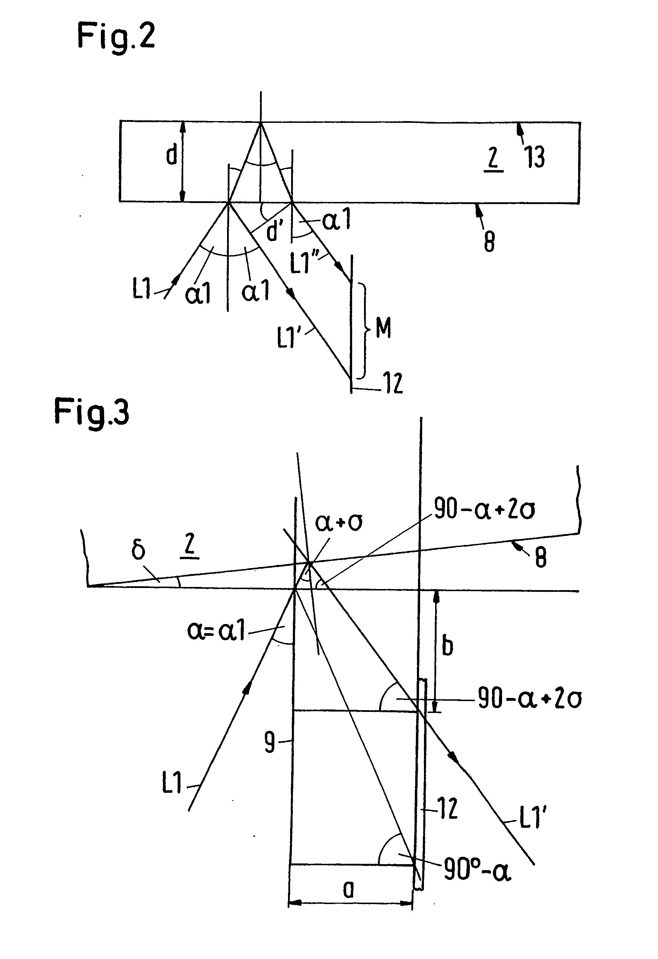

Zur Ermittlung der Dicke d des Glasbands 2 wird zunächst aus dem Abstand d' der von dem ersten Laserstrahl L1 an der vorderen und der hinteren Oberfläche 8, 13 des Glasbands 2 reflektierten Laserstrahlen L1', L1" die Dicke d des Glasbands 2 errechnet. Unter der Voraussetzung, dass das Glas bei parallelen vorderen und hinteren Oberflächen 8, 13 vollkommen eben ist und der Einfallswinkel $\alpha$1 genau bekannt ist, kann die Dicke d mit einem einfachen Verfahren ermittelt werden, das anhand von Fig. 2 nachfolgend erläutert wird.

Der in der Darstellung gemäß Fig. 2 von links mit einem Einfallswinkel $\alpha$1 einfallende Laserstrahl L1 wird an der vorderen Oberfläche 8 des Glasbands 2 teilweise reflektiert und fällt mit gleichem Ausfallwinkel $\alpha$1 als reflektierter Laserstrahl L1' aus. Ein anderer Teil des Laserstrahls L1 wird in das Glasband 2 hinein gebrochen, an der hinteren Oberfläche 13 des Glasbands 2 reflektiert und fällt unter dem gleichen Ausfallwinkel $\alpha$1 parallel versetzt zu dem an der vorderen Oberfläche 8 reflektierten Laserstrahl L1' als reflektierter Strahl L1" aus.

Der senkrechte Abstand d' zwischen den beiden reflektierten Strahlen L1', L1" wird unter Verwendung des bekannten Ein- und Ausfallswinkels α (α1 für L1) und der Anordnung des Detektors 12 in Bezug auf das Glasband 2 aus den Positionsdaten der Strahlen L1' und L1" auf dem Detektor 12 ermittelt.

Dann ergibt sich die Dicke d des Glasbands 2 aus der Beziehung

$$d = d' \cdot \frac{\sqrt{n^2 - \sin^2 \alpha}}{\sin 2\alpha},$$

wobei d' der senkrechte Abstand zwischen den reflektierten Strahlen L1', L1 ", n der Brechungsindex und α gleich dem Einfallswinkel α1 ist. Der Abstand d' ergibt sich aus dem gemessenen Abstand M der Strahlen L1' und L1" auf dem Detektor 12 aus der Beziehung d' = M · sin α.

In entsprechender Weise kann die Dicke des Glasbands 2 für den von rechts unter dem Einfallswinkel α2 einfallenden Laserstrahl L2 ermittelt werden. Daraus resultieren zwei erste Dickenwerte d1 und d2, die im Idealfall übereinstimmen.

In der Praxis sind jedoch die zuvor genannten Voraussetzungen eines bekannten unveränderlichen Einfallswinkels α und einer ebenen, parallelen Probenoberfläche nicht gegeben. Ferner gibt es quer zur Zieh- bzw. Bewegungsrichtung 15 des Glasbands 2 optische Störungen. Weil die optischen Störungen in Ziehrichtung 15 in der Regel wesentlich kleiner sind, sollen die drei Strahlen L1, L1' und L1" in einer gemeinsamen Strahlebene 14 mit der Ziehrichtung 15 des Glasbands 2 liegen. Durch diese geometrische Anordnung kann der Einfluss dieser Störung für die praktische Anwendung eliminiert werden.

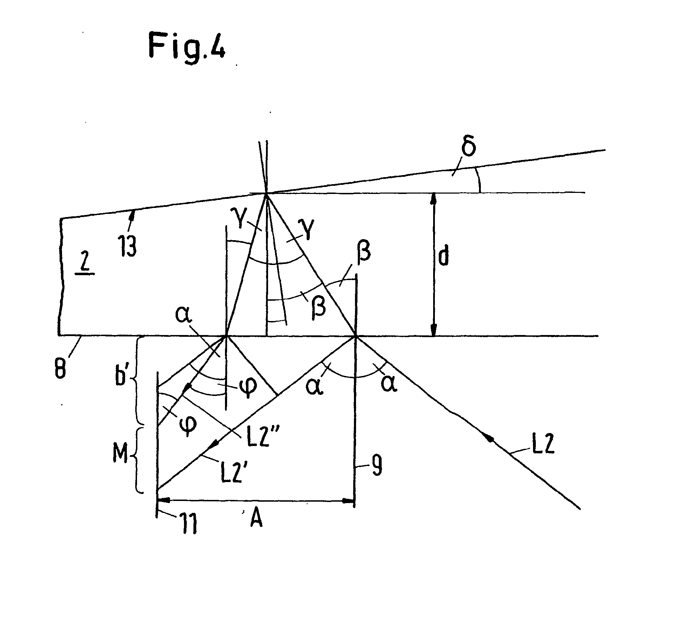

Das Glasband 2 kann sich bspw. auf einem Rollengang auch neigen, so dass der Einfallswinkel α = α1, α2 verschiedene Werte annehmen kann. Zur Korrektur verwendet man den zweiten einfallenden Laserstrahl L2, der nicht von links, sondern von rechts einfällt und in derselben Strahlebene 14 liegt. Gleichzeitig kann mit diesem System auch ein eventuell vorhandener Keilwinkel des Glasbands 2 bestimmt und korrigiert werden, wobei die Verfahrensschritte nachfolgend anhand von Fig. 3 und 4 erläutert werden.

Wenn der einfallende Strahl L1 nicht an einem senkrecht zum Dickensensor 1 ausgerichteten Glasband 2, bei dem die Probennormale 9 mit der Symmetrieachse des Dickensensors übereinstimmt, sondern an einer um einen Neigungswinkel σ geneigten Glasband 2 reflektiert wird, ist der Ausfallwinkel in der Strahlebene 14 nicht gleich dem gedachten Einfallwinkel α = α1, sondern beträgt α = α1 + σ.

Für die Neigungskorrektur wird nicht nur der von links einfallende Strahl L1, sondern auch der von rechts einfallende Strahl L2 verwendet, der der Übersichtlichkeit halber in Fig. 3 nicht eingezeichnet ist. Statt dessen ist zum Vergleich ohne Bezugszeichen ein an einem waagrechten Glasband 2 unter dem Ausfallwinkel α1 auslaufender Lichtstrahl dargestellt, der dem Strahl L1' aus Fig. 2 entspricht.

Der Einfallwinkel α für den zweiten Strahl L2 beträgt dann α = α2 - σ. Dies führt dazu, dass die von dem ersten und dem zweiten Strahl L1 und L2 reflektierten Strahlen L1', L1" und L2', L2" nicht mehr im selben Anstand vom Glasband 2 auf den Detektor 11, 12 treffen, wie dies ansonsten aufgrund des symmetrischen Aufbaus des Dickensensors 1 der Fall wäre. Wenn also der Abstand b1, mit dem der an der vorderen Oberfläche 8 reflektierte Strahl L1' auf den Detektor 12 trifft nicht gleich dem Abstand b2 ist, mit dem an der vorderen Oberfläche reflektierte Strahl L2' auf den Detektor 11 trifft, muss eine Keilwinkelkorrektur durchgeführt werden. Diese wird nachfolgend beschrieben:

Zur Ermittlung des Neigungswinkels σ wird der Abstand b1 des an der vorderen Oberfläche 8 reflektierten Strahls L1' von der Oberfläche 8 im Detektor 12 bestimmt, wobei der Abstand b1 in Richtung der Probennormale 9 der nicht geneigten Probe 2 ermittelt wird.

Bei Kenntnis des Abstands a des Detektors 12 vom Auftreffpunkt des ersten Strahls L1 in Richtung der Oberfläche 8 des Glasbands 2, d.h. senkrecht zur Probennormale 9, gilt für den von links einfallenden Strahl L1:

$$tg(\alpha + 2\sigma) = \frac{a}{b_1}.$$

Für den von rechts einfallenden, in Fig. 3 nicht dargestellten von rechts einfallenden Strahl L2 gilt entsprechend:

$$tg(\alpha - 2\sigma) = \frac{a}{b_2}.$$

Die Differenz b1 - b2 kann aus den gemessenen Positionen bspw. der an der vorderen Oberfläche 8 reflektierten Strahlen L1' und L2' bestimmt werden. Es ist günstig, die Differenz für die Berechnung zu wählen, da sich ein konstanter Betrag, um den sich das Glasband insgesamt angehoben hätte, heraushebt. Unter der Voraussetzung α = α1 = α2 lässt sich der Neigungswinkel σ ausrechnen. Um genau diesen Winkel vergrößert bzw. verkleinert sich der eingestellte Einfallswinkel α = α1 = α2 für den von links bzw. von rechts einfallenden Strahl L1 bzw. L2, so dass der in Gleichung zur Bestimmung der Dicke d einzusetzende Einfallswinkel entsprechend korrigiert werden muss, um die Dicke d des Glasbands 2 richtig zu bestimmen.

Das Glasband 2 selbst kann ferner einen δ Keilwinkel aufweisen, wie in Fig. 4 dargestellt. Wenn die Abstände M1 und M2 zwischen den an der vorderen und der hinteren Oberfläche 8, 13 reflektierten Laserstrahlen L1', L1'' bzw. L2', L2'' nicht gleich sind, ist das Glasband 2 mit einem Keil versehen. Dies kann aus den Positionen der reflektierten Strahlen L1', L1'' und L2', L2'' auf dem Detektor ermittelt werden.

Bei Vorligen eines Keilwinkels δ lassen sich entsprechend Fig. 4 für die von links und rechts einfallenden Strahlen L1 und L2 jeweils Dickenwerte d1 und d2 bestimmen, wobei sich die Dicke d der Probe 2 dann aus deren Mittelwert ergibt. Es ist auch möglich, die Abstände M1 und M2 zwischen den reflektierten Strahlen L1' und L1'' bzw. L2' und L2'' zu mitteln und daraus die Probendicke zu ermitteln.

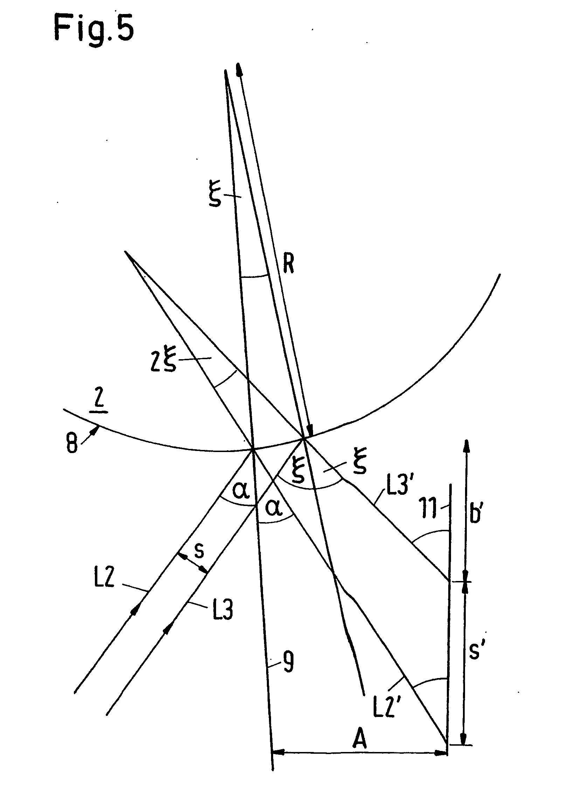

Das Glasband 2 kann zusätzlich auch noch gekrümmt sein. Um dies festzustellen, wird der dritte Laserstrahl L3 parallel zu einem der ersten beiden einfallenden Strahlen, im dargestellten Fall dem Laserstrahl L2, in einem durch die Konstruktion des Dickensensors 1 bekannten Abstand s eingestrahlt. In dem dargestellten Beispiel gemäß Fig. 5 ist dabei die Strahlrichtung der Strahlen L2, L3 im Vergleich zu Fig. 1 umgekehrt. Dies hat jedoch für das Funktionsprinzip keine Bedeutung. Die Reflexion der Strahlen L2, L3 an der vorderen Oberfläche kann zur Bestimmung des Krümmungsradius R der Probe 2 benutzt werden, wie nachfolgend anhand von Fig. 5 erläutert wird.

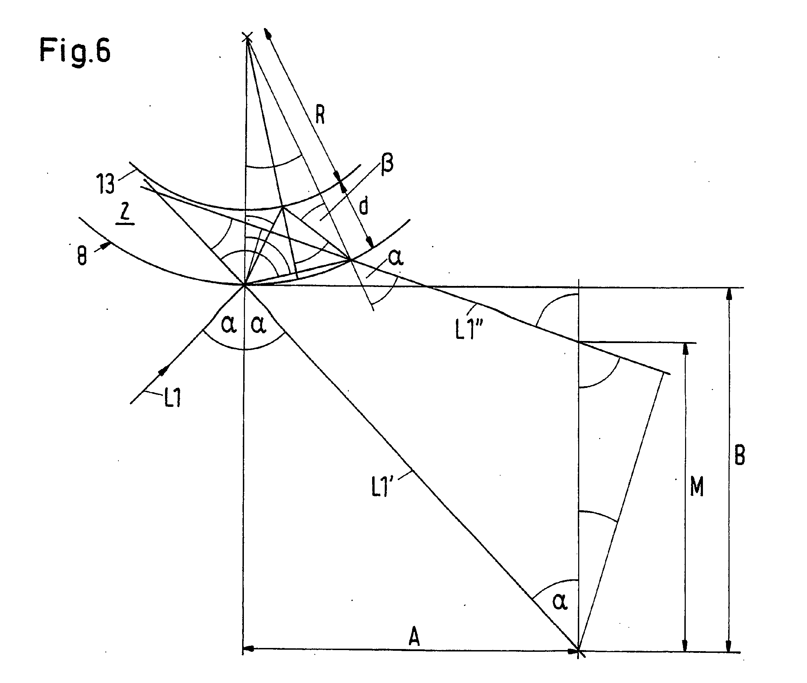

Die an der vorderen Oberfläche 8 der gekrümmten Probe 2 reflektierten Strahlen L2' und L3' fallen mit einem Abstand S' auf den Detektor 11. Wenn bei einem Einfallswinkel α der einfallenden Strahlen L2 und L3 der Abstand S' nicht durch die Beziehung S' = s / cos α gegeben ist, liegt eine Krümmung der Unterseite des Glasbandes 2 vor. Aus den Positionen der reflektierten Strahlen L2' und L3' kann der Krümmungsradius R bestimmt werden, der dann entsprechend Fig. 6 in die Berechnung der Dicke d der Probe 2 mit eingeht.

Die Messgrößen werden jeweils für die beiden einfallenden Strahlen L1 und L2 bestimmt. Daraus ergeben sich dann zwei Dickenwerte d1 und d2, aus denen der Mittelwert gebildet wird. Insbesondere sind die Einfallswinkel α1 und α2 und damit auch die Winkel β1 und β2 für die beiden einfallenden Strahlen verschieden. Sie ergeben sich bei der Neigungskorrektur für das Glasband 2.

Schließlich kann noch eine Korrektur berücksichtigt werden, die notwendig wird, wenn die parallel einfallenden Strahlen L2 und L3 doch nicht ganz parallel sind.

Bei Anwendung des vorbeschriebenen Verfahrens, bei dem eine Neigungskorrektur, eine Keilwinkelkorrektur und ein Krümmungskorrektur nacheinander angewendet werden, kann die Glas- bzw. Materialdicke einer transparenten Probe mit einer hohen Genauigkeit von 0,1 % ermittelt werden. Dazu wird vorzugsweise die erfindungsgemäße Vorrichtung verwendet.

**Bezugszeichenliste:**

| | |
|---|---|
| 1 | Dickensensor |
| 2 | Probe, Glasband |
| 3, 4 | Strahlteiler |
| 5,6 | Spiegel |
| 7 | Öffnung |
| 8 | vordere Oberfläche |
| 9 | Probennormale |
| 10 | Einfallsbereich |
| 11, 12 | Detektor |
| 13 | hintere Oberfläche |
| 14 | Strahlebene |
| 15 | Bewegungsrichtung |
| L | Lichtstrahl, Laserstrahl |
| L1, L2, L3 | einfallende Laserstrahlen |
| L1', L2', L3' | an der vorderen Oberfläche reflektierte Laserstrahlen |
| L1'', L2'' | an der hinteren Oberfläche reflektierte Laserstrahlen |
| a, A | Abstand von dem Einfallspunkt eines Lichtstrahls auf dem Glasband bis zu dem Detektor parallel zum Glasband |
| b, B | Abstand der Postition eines Laserstrahls auf dem Detektor von dem Glasband senkrecht zum Glasband |
| d | Dicke des Glasbands |
| d' | senkrechter Abstand zwischen an der vorderen und der hinteren Oberfläche reflektierten Laserstrahlen |
| s | Abstand parallel einfallender Laserstrahlen |
| M, S' | Abstand reflektierter Laserstrahlen auf dem Detektor |
| R | Krümmungsradius |
| α | Einfallswinkel |
| σ | Neigungswinkel |
| δ | Keilwinkel |

**Patentansprüche**

**1.** Vorrichtung zur Messung der Dicke einer transparenten Probe (2), insbesondere eines Glasbands oder einer Glasscheibe,
mit einem unter einem ersten Einfallswinkel (α1) schräg auf die vordere Oberfläche (8) der Probe (2) einfallenden ersten Lichtstrahl (L1), insbesondere einem ersten Laserstrahl,
mit einem unter einem zweiten Einfallswinkel (α2) schräg auf die vordere Oberfläche (8) der Probe (2) einfallenden zweiten Lichtstrahl (L2), insbesondere einem zweiten Laserstrahl,
wobei der erste Einfallswinkel ($\alpha$1) und der zweite Einfallswinkel ($\alpha$2) verschieden sind,
und mit mindestens einem Detektor (11, 12) zum Erfassen der von der Probe (2) reflektierten Lichtstrahlen (L1', L1", L2', L2") der ersten und zweiten einfallenden Lichtstrahlen (L1, L2) und zum Feststellen deren Position, **dadurch gekennzeichnet, dass**
mindestens ein einfallender, zu dem ersten oder zweiten Lichtstrahl (L1, L2) im Wesentlichen paralleler Lichtstrahl (L3) auf die vordere Oberfläche (8) der Probe (2) gerichtet ist und dass
mindestens ein Detektor (11) zum Erfassen eines von der Probe (2) reflektierten Lichtstrahls (L3') des parallelen Lichtstrahls (L3) und zum Feststellen dessen Position vorgesehen ist.

2. Vorrichtung nach Anspruch 1, **dadurch gekennzeichnet, dass** der dritte Lichtstrahl (L3) abschaltbar ist.

3. Vorrichtung nach Anspruch 1 oder 2, **dadurch gekennzeichnet, dass** die einfallenden Lichtstrahlen (L1, L2, L3) und/oder die reflektierten Lichtstrahlen (L1', L1", L2', L2", L3') in einer gemeinsamen Strahlebene (14) liegen.

4. Vorrichtung nach einem der vorhergehenden Anspüche, **dadurch gekennzeichnet, dass** die Vorrichtung (1) und die transparente Probe (2) relativ zueinander bewegt sind.

5. Vorrichtung nach Anspruch 3 und 4, **dadurch gekennzeichnet, dass** die relative Bewegungsrichtung (15) in der gemeinsamen Strahlebene (14) der einfallenden Lichtstrahlen (L1, L2, L3) und/oder der reflektierten Lichtstrahlen (L1', L1", L2', L2", L3') liegt.

6. Vorrichtung nach einem der vorhergehenden Ansprüche, **dadurch gekennzeichnet, dass** der erste Einfallswinkel ($\alpha$1) und der zweite Einfallswinkel ($\alpha$2) in der durch den ersten und den zweiten Lichtstrahl (L1, L2) aufgespannten Strahlebene (14) auf verschiedenen Seiten bezogen auf die Probennormale (9) im Einfallsbereich (10) liegen.

7. Vorrichtung nach einem der vorhergehenden Ansprüche, **dadurch gekennzeichnet, dass** zwei Detektoren (11, 12) beabstandet voneinander vorzugsweise senkrecht zu der Oberfläche (8) der Probe (2) angeordnet sind.

8. Vorrichtung nach einem der vorhergehenden Ansprüche, **dadurch gekennzeichnet, dass** der Einfallsbereich (10) der einfallenden ersten, zweiten und dritten Lichtstrahlen (L1, L2, L3) auf die Probe (2) kleiner ist als der Abstand zweier gegenüberliegender Detektoren zum Erfassen der reflektierten Lichtstrahlen (L1', L1", L2', L2", L3').

9. Vorrichtung nach einem der vorhergehenden Ansprüche, **gekennzeichnet durch** zwei Strahlteiler (3, 4) zur Erzeugung der drei Lichtstrahlen (L1, L2, L3) aus einem Lichtstrahl (L).

10. Vorrichtung nach einem der vorhergehenden Ansprüche, **gekennzeichnet durch** eine an den mindestens einen Detektor (11, 12) angeschlossene Auswerteeinrichtung zur Bestimmung der Dicke der Probe (2), wobei insbesondere eine Neigungskorrektur, eine Winkelkorrektur und/oder eine Krümmungskorrektur durchgeführt wird.

11. Verfahren zur Messung der Dicke einer transparenten Probe (2), insbesondere mit einer Vorrichtung (1) gemäß den Ansprüchen 1 bis 9,
bei dem ein erster Lichtstrahl (L1) unter einem ersten Einfallswinkel ($\alpha$1) schräg auf die vordere Oberfläche (8) der Probe (2) einfällt und die Positionen des an der vorderen Oberfläche (8) reflektierten Lichtstrahls (L1') und des an der hinteren Oberfläche (13) reflektierten Lichtstrahls (L1") bestimmt werden,
bei dem ein zweiter Lichtstrahl (L2) unter einem zweiten, von dem ersten Einfallswinkel ($\alpha$1) verschiedenen Einfallswinkel ($\alpha$2) schräg auf die vordere Oberfläche (8) der Probe (2) einfällt und die Positionen des an der vorderen Oberfläche (8) reflektierten Lichtstrahls (L2') und des an der hinteren Oberfläche (13) reflektierten Lichtstrahls (L2") bestimmt werden,
wobei aus dem Abstand der an der vorderen Oberfläche (8) und der hinteren Oberfläche (13) reflektierten Lichtstrahlen (L1', L1", L2', L2") des ersten Lichtstrahls (L1) und/oder des zweiten Lichtstrahls (L2) die Dicke der transparenten Probe (2) ermittelt wird,
wobei durch Vergleich der Positionen zumindest eines Teils der reflektierten Lichtstrahlen (L1', L1", L2', L2") eine Neigungs- und/oder Keilwinkelkorrektur durchgeführt wird, **dadurch gekennzeichnet, dass** mindestens ein dritter Lichtstrahl (L3) in einem bekannten Abstand (s) im Wesentlichen parallel zu dem ersten oder zweiten Lichtstrahl (L2) schräg auf die vordere Oberfläche (8) einfällt und durch Bestimmung der Positionen der jeweils an der vorderen Oberfläche (8) bzw. an der hinteren Oberfläche (13) reflektierten Lichtstrahlen (L2', L3') dieser parallelen Lichtstrahlen (L2, L3) eine Krümmungskorrektur durchgeführt wird.

12. Verfahren nach Anspruch 11, **dadurch gekennzeichnet, dass** der erste Lichtstrahl (L1) und der zweite Lichtstrahl (L2) in der durch sie aufgespannten Strahlebene (14) bezogen auf die Probennormale (9) im Einfallsbereich (10) von unterschiedlichen Seiten auf die vordere Oberfläche (8) der Probe (2) einfallen.

13. Verfahren nach Anspruch 12, **dadurch gekennzeichnet, dass** der erste und der zweite Einfallswinkel ($\alpha$1, $\alpha$2) betragsmäßig gleich sind, vorzugsweise 45° betragen.

14. Verfahren nach einem der Ansprüche 11 bis 13, **dadurch gekennzeichnet, dass** zur Neigungs- und/oder Keilwinkelkorrektur aus der Position der vorzugsweise an der vorderen Oberfläche (8) reflektierten Lichtstrahlen (L1', L2') jeweils der Abstand zu der Probe (2) ermittelt wird, wobei bei einander nicht entsprechendem Abstand eine Keilwinkel- oder eine Neigungskorrektur vorgenommen wird.

15. Verfahren nach Anspruch 14, **dadurch gekennzeichnet, dass** aus einem nicht entsprechenden Abstand der reflektierten Lichtstrahlen ein Keil- bzw. Neigungswinkel ($\delta$, $\sigma$) ermittelt wird.

16. Verfahren nach einem der Ansprüche 11 bis 15, **dadurch gekennzeichnet, dass** der Abstand zwischen den reflektierten Lichtstrahlen (L3', L2') des dritten Lichtstrahls (L3) und des dazu im Wesentlichen parallelen ersten oder zweiten Lichtstrahls (L2) bestimmt und ggf. eine Krümmungskorrektur durchgeführt wird.

17. Verfahren nach Anspruch 16, **dadurch gekennzeichnet, dass** aus dem Abstand zwischen den reflektierten Lichtstrahlen (L3', L2') des dritten Lichtstrahls (L3) und des dazu im Wesentlichen parallelen ersten oder zweiten Lichtstrahls (L2) der Krümmungsradius (R) und/oder-winkel ermittelt wird.

18. Verfahren nach Anspruch 17, **dadurch gekennzeichnet, dass** aus dem Krümmungsradius (R) die Brechkraft bestimmt wird.

**Claims**

1. A device for measuring the thickness of a transparent sample (2), in particular a glass strip or a glass pane, with a first light beam (L1), in particular a first laser beam, which strikes obliquely on the front surface (8) of the sample (2), at a first angle of incidence ($\alpha$1), with a second light beam (L2), in particular a second laser beam, which strikes obliquely on the front surface (8) of the sample (2), at a second angle of incidence ($\alpha$2), wherein the first angle of incidence ($\alpha$1) and the second angle of incidence ($\alpha$2) are different, and with at least one detector (11, 12) for detecting the light beams (L1', L1", L2', L2") of the first and second incident light beams (L1, L2) that are reflected by the sample (2), and for determining their position, **characterised in that** at least one incident light beam (L3), which is essentially parallel to the first or second light beam (L1, L2), is directed toward the front surface (8) of the sample (2), and **in that** at least one detector (11) is provided for detecting a light beam (L3'), reflected by the sample (2), of the parallel light beam (L3), and for determining its position.

2. Device as claimed in claim 1, **characterised in that** the third light beam (L3) can be switched off.

3. Device as claimed in claim 1 or 2, **characterised in that** the incident light beams (L1, L2, L3) and/or the reflected light beams (L1', L1", L2', L2", L3') lie in a common beam plane (14).

4. Device as claimed in one of the preceding claims, **characterised in that** the device (1) and the transparent sample (2) are moved relative to one another.

5. Device as claimed in claim 3 and 4, **characterised in that** the relative direction of movement (15) lies in the common beam plane (14) of the incident light beams (L1, L2, L3) and/or of the reflected light beams (L1', L1", L2', L2", L3').

6. Device as claimed in one of the preceding claims, **characterised in that** the first angle of incidence ($\alpha$1) and the second angle of incidence ($\alpha$2) lie in the beam plane (14) defined by the first and second light beams (L1, L2), on different sides in relation to the sample normal (9) in the region of incidence (10).

7. Device as claimed in one of the preceding claims, **characterised in that** two detectors (11, 12) are arranged spaced apart from one another, preferably perpendicular to the surface (8) of the sample (2).

8. Device as claimed in one of the preceding claims, **characterised in that** the region of incidence (10) of the incident first, second and third light beams (L1, L2, L3) on the sample (2) is smaller than the spacing of two opposite detectors for detecting the reflected light beams (L1', L1", L2', L2", L3').

9. Device as claimed in one of the preceding claims, **characterised by** two beam splitters (3, 4) for producing the three light beams (L1, L2, L3) from one light beam (L).

10. Device as claimed in one of the preceding claims, **characterised by** an evaluation device which is connected to the at least one detector (11, 12) and which is for determining the thickness of the sample (2), wherein in particular a correction of inclination, angle and/or curvature is carried out.

11. A method for measuring the thickness of a transparent sample (2), in particular with a device (1) as claimed in claims 1 to 9,
in which a first light beam (L1) strikes obliquely on the front surface (8) of the sample (2), at a first angle of incidence ($\alpha$1), and the positions of the light beam (L1') reflected at the front surface (8) and of the light beam (L1") reflected at the rear surface (13) are determined,
in which a second light beam (L2) strikes obliquely on the front surface (8) of the sample (2), at a second angle of incidence ($\alpha$2) that is different from the first angle of incidence ($\alpha$1), and the positions of the light beam (L2') reflected at the front surface (8) and of the light beam (L2') reflected at the rear surface (13) are determined,
wherein the thickness of the transparent sample (2) is determined from the spacing of the light beams (L1', L1", L2', L2"), reflected at the front surface (8) and the rear surface (13), of the first light beam (L1) and/or of the second light beam (L2),
wherein a correction of the inclination and/or wedge angle is carried out by comparing the positions of at least a portion of the reflected light beams (L1', L1 ", L2', L2"),
**characterised in that**
at least one third light beam (L3) strikes obliquely on the front surface (8) at a known spacing (s) essentially parallel to the first or second light beam (L2), and a curvature correction is carried out by determining the positions of the light beams (L2', L3'), that are respectively reflected at the front surface (8) and the rear surface (13), of these parallel light beams (L2, L3).

12. Method as claimed in claim 11, **characterised in that** the first light beam (L1) and the second light beam (L2) are incident from different sides on the front surface (8) of the sample (2) in the beam plane (14), defined by them, relative to the sample normal (9) in the region of incidence (10).

13. Method as claimed in claim 12, **characterised in that** the first and the second angles of incidence ($\alpha$1, $\alpha$2) are equal in absolute value and are preferably 45°.

14. Method as claimed in one of claims 11 to 13, **characterised in that** for the purpose of correcting the inclination and/or wedge angle, the spacing from the sample (2) is determined in each case from the position of the light beams (L1', L2') preferably reflected at the front surface (8), wherein a wedge angle or an inclination correction is undertaken when spacings do not correspond.

15. Method as claimed in claim 14, **characterised in that** a wedge angle or inclination angle ($\delta$, $\sigma$) is determined from a non-corresponding spacing of the reflected light beams.

16. Method as claimed in one of claims 11 to 15, **characterised in that** the spacing between the reflected light beams (L3', L2') of the third light beam (L3) and of the first or second light beam (L2) that is essentially parallel thereto is determined and, if appropriate, a curvature correction is carried out.

17. Method as claimed in claim 16, **characterised in that** the radius of curvature (R) and/or angle of curvature are/is determined from the spacing between the reflected light beams (L3', L2') of the third light beam (L3) and of the first or second light beam (L2) essentially parallel thereto.

18. Method as claimed in claim 17, **characterised in that** the refractive power is determined from the radius of curvature (R).

**Revendications**

1. Dispositif de mesure de l'épaisseur d'un échantillon transparent (2), notamment d'une bande ou d' un disque en fibres de verre, comprenant

■ un premier faisceau lumineux (L1) incident sur la surface avant (8) de l'échantillon (2) selon un premier angle d'incidence ($\alpha$1), notamment un premier faisceau laser,
■ un deuxième faisceau lumineux (L2) incident sur la surface avant (8) de l'échantillon (2) selon un deuxième angle d'incidence ($\alpha$2), notamment un deuxième faisceau laser,
■ dans lequel le premier angle d'incidence ($\alpha$1) et le deuxième angle d'incidence ($\alpha$2) sont différents,
■ et comprenant au moins un détecteur (11, 12) pour détecter les faisceaux lumineux (L1', L1", L2', L2") réfléchis par l'échantillon (2) des premier et deuxième faisceaux lumineux (L1, L2) incidents et pour déterminer leur position, **caractérisé en ce**
■ **qu'**au moins un faisceau lumineux (L3) incident essentiellement parallèle au premier ou au deuxième faisceau lumineux (L1, L2) est aligné sur la surface avant (8) de l'échantillon (2) et
■ **qu'**au moins un détecteur (11) est prévu pour détecter un faisceau lumineux (L3') réfléchi par l'échantillon (2) du faisceau lumineux parallèle (L3) pour déterminer sa position.

**2.** Dispositif selon la revendication 1, **caractérisé en ce que** le troisième faisceau lumineux (L3) peut être désactivé.

**3.** Dispositif selon la revendication 1 ou 2, **caractérisé en ce que** les faisceaux lumineux incidents (L1, L2, L3) et/ou les faisceaux lumineux réfléchis (L1', L1" L2', L2" , L3') reposent dans un plan de faisceau commun (14).

**4.** Dispositif selon l'une des revendications précédentes, **caractérisé en ce que** le dispositif (1) et l'échantillon transparent (2) sont mobiles l'un par rapport à l'autre.

**5.** Dispositif selon les revendications 3 et 4, **caractérisé en ce que** la direction de mouvement relatif (15) repose le plan de faisceau commun (14) des faisceaux lumineux incidents (L1, L2, L3) et/ou des faisceaux lumineux réfléchis (L1', L1" L2', L2" L3').

**6.** Dispositif selon l'une des revendications précédentes, **caractérisé en ce que** le premier angle d'incidence ($\alpha$1) et le deuxième angle d'incidence ($\alpha$2) reposent dans le plan de faisceau (14) défini par le premier et le deuxième faisceau lumineux (L1, L2) sur différents côtés par rapport à la normale de l'échantillon (9) dans la zone d'incidence (10).

**7.** Dispositif selon l'une des revendications précédentes, **caractérisé en ce que** deux détecteurs (11, 12) sont placés à distance l'un de l'autre de préférence perpendiculaire à la surface (8) de l'échantillon (2).

**8.** Dispositif selon l'une des revendications précédentes, **caractérisé en ce que** la zone d'incidence (10) des premier, deuxième et troisième faisceaux lumineux incidents (L1, L2, L3) sur l'échantillon (2) est plus petite que la distance des deux détecteurs se faisant face pour détecter les faisceaux lumineux réfléchis (L1' , L1" L2', L2", L3').

**9.** Dispositif selon l'une des revendications précédentes, **caractérisé en ce qu'**il comprend deux diviseurs de faisceau (3, 4) pour produire les trois faisceaux lumineux incidents (L1, L2, L3) à partir d'un faisceau lumineux (L).

**10.** Dispositif selon l'une des revendications précédentes, **caractérisé en ce qu'**il comprend un dispositif d'évaluation relié à l'au moins un détecteur (11, 12) pour définir l'épaisseur de l'échantillon (2), moyennant quoi particulièrement une correction de l'inclinaison, de l'angle et/ou de la courbure est réalisée.

**11.** Procédé de mesure de l'épaisseur d'un échantillon transparent (2), notamment avec un dispositif (1) selon les revendications 1 à 9, dans lequel

■ un premier faisceau lumineux (L1) est incident sur la surface avant (8) de l'échantillon (2) selon un premier angle d'incidence ($\alpha$1) et les positions du faisceau lumineux (L1') réfléchi sur la surface avant (8) et du faisceau lumineux (L1") réfléchi sur la surface arrière (13) sont définies,
■ un deuxième faisceau lumineux (L2) est incident sur la surface avant (8) de l'échantillon (2) selon un deuxième angle d'incidence ($\alpha$2) différent du premier angle d'incidence ($\alpha$1) et les positions du faisceau lumineux (L2') réfléchi sur la surface avant (8) et du faisceau lumineux (L2") réfléchi sur la surface arrière (13) sont définies,
■ moyennant quoi à partir de la distance des faisceaux lumineux (L1', L1" L2', L2") du premier faisceau lumineux (L1) et/ou du deuxième faisceau lumineux (L2) réfléchis sur la surface avant (8) et sur la surface arrière (13), l'épaisseur de l'échantillon transparent (2) est calculée,
■ moyennant quoi en comparant la position d'au moins une partie des faisceaux lumineux (L1' , L1", L2', L2") réfléchis, une correction de l'inclinaison et/ou de l'angle de coin est réalisée, **caractérisé en ce**
■ **qu'**au moins un troisième faisceau lumineux (L3) est incident sur la surface avant (8) à une distance connue (s) essentiellement parallèle du premier ou le deuxième faisceau lumineux (L2), et par calcul des positions des faisceaux lumineux (L2', L3') de ces faisceaux lumineux parallèles (L2, L3) réfléchis respectivement sur la surface avant (8) respectivement la surface arrière (13), une correction de la courbure est réalisée.

**12.** Procédé selon la revendication 11, **caractérisé en ce que** le premier faisceau lumineux (L1) et le deuxième faisceau lumineux (L2) sont incidents sur la surface avant (8) de l'échantillon (2) dans le plan de faisceau (14) défini par eux par rapport à la normale de l'échantillon (9) dans la zone d'incidence (10) de différents côtés.

**13.** Procédé selon la revendication 12, **caractérisé en ce que** le premier et le deuxième angle d'incidence ($\alpha$1, $\alpha$2) sont égaux en degrés et sont de préférence de 45°.

**14.** Procédé selon l'une des revendications 11 à 13, **caractérisé en ce que** pour la correction de l'inclinaison et/ou de l'angle de coin, la distance jusqu'à l'échantillon (2) est respectivement calculée à partir de la position des faisceaux lumineux (L1', L2') réfléchis de préférence sur la surface avant (8), moyennant quoi si les distances ne correspondent pas l'une à l'autre, une correction de l'angle de coin ou de l'inclinaison est réalisée.

**15.** Procédé selon la revendication 14, **caractérisé en ce qu'**à partir d'une distance qui ne correspond pas des faisceaux lumineux réfléchis, un angle de coin respectivement d'inclinaison ($\delta$, $\sigma$) est calculé.

**16.** Procédé selon l'une des revendications 11 à 15, **caractérisé en ce que** la distance entre les faisceaux lumineux (L3', L2') réfléchis du troisième faisceau lumineux (L3) et le premier ou deuxième faisceau lumineux (L2) essentiellement parallèle à celui-ci est calculée et que le cas échéant une correction de la courbure est réalisée.

**17.** Procédé selon la revendication 16, **caractérisé en ce qu'**à partir de la distance entre les faisceaux lumineux (L3', L2') réfléchis du troisième faisceau lumineux (L3) et le premier ou deuxième faisceau lumineux (L2) essentiellement parallèle à celui-ci, le faisceau (R) et/ou l'angle de courbure est calculé.

**18.** Procédé selon la revendication 17, **caractérisé en ce que** la puissance de réfraction est calculée à partir du rayon de courbure (R).

## Fig.1

# Fig.2

# Fig.3

# Fig.4

# Fig.5

Fig.6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4143186 A1
- EP 0485043 A